# EUROPEAN PATENT SPECIFICATION

(11) **EP 4 012 646 B1**
(45) Date of publication and mention of the grant of the patent: **12.03.2025**
(21) Application number: 20850448.0
(22) Date of filing: 27.07.2020
(51) Int. Cl.: G07B 15/06, G06Q 10/02, G06Q 20/16, G07B 15/02, G06Q 50/40, G06Q 30/0645, G06Q 30/0283, G07F 17/00, G06Q 20/14, G06Q 30/04

(54) **METHOD, DEVICE, AND SYSTEM FOR PROVIDING VEHICLE SHARING SERVICE**
VERFAHREN, VORRICHTUNG UND SYSTEM ZUR BEREITSTELLUNG EINES FAHRZEUGSHARING-DIENSTES
PROCÉDÉ, DISPOSITIF ET SYSTÈME DE FOURNITURE DE SERVICE DE PARTAGE DE VÉHICULE

(30) Priority: 07.08.2019 KR 20190096209
(43) Date of publication of application: 15.06.2022
(73) Proprietor: Altimobility Corporation, Seocho-gu, Seoul 06655 (KR)
(72) Inventor: WOO, Hyuk Joon, Yongin-si, Gyeonggi-do 16925 (KR); LEE, Sang Min, Seoul 07951 (KR); JUNG, Sung Ill, Yongin-si, Gyeonggi-do 16876 (KR)
(74) Representative: Botti & Ferrari S.p.A.
(86) International application number: PCT/KR2020/009868
(87) International publication number: WO 2021/025353

(56) References cited:
- JP-A- 2012 243 228
- KR-A- 20120 134 359
- KR-A- 20130 112 512
- KR-A- 20150 020 738
- KR-A- 20170 022 844
- KR-B1- 101 100 683
- US-A1- 2007 124 197
- US-A1- 2008 270 226

## Description

### [Technical Field]

The present disclosure relates to a vehicle sharing service, and more particularly, relates to a method for providing a vehicle sharing service, which is capable of processing a shared vehicle toll fee more conveniently and intelligently, device(s) therefor, and a system therefor.

### [Background Art]

Recently, amid the global interest in the sharing economy, a car-sharing (vehicle sharing) service in which vehicles are shared by an unspecified number of people has been rapidly spread. As users who use the vehicle sharing service increase, shared vehicles have rapidly increased.

The vehicle sharing service is a kind of rental car service in which an unspecified number of people rent a specific vehicle for the required time. From the perspective of users, the biggest difference from existing car rentals is that users are able to select and reserve the shared vehicle they want using an app installed on their smartphones, without having to face the car owner or a provider who provides the vehicle sharing service directly.

Because the shared vehicle is a vehicle shared by several users, various fees incurred in the shared vehicle while driving should be accurately charged to the corresponding user.

Most shared vehicles settle toll fees using their postpaid hi-pass electronic cards. However, because the postpaid hi-pass electronic card performs a monthly settlement, toll fees may be charged to the user after a large amount of time has elapsed after the shared vehicle is used. However, when toll fees are charged after a long time has elapsed, a dispute over the toll fees may arise between the vehicle sharing service provider and the customer.

Thus, it is necessary to accurately charge fees of a toll road such as a highway in real time, although the postpaid hi-pass card is used.

US 2007/124197 A1 discloses a system and method for billing comprising receiving data related to a tracking device coupled to a rented transport, contemporaneously receiving information including at least one of: a direction of travel by the transport, a location of the transport, a price of the toll, a toll gate number, a date, and a time, reading the received information by a reader, sending the read information to a database, matching the sent information with information related to a rental agreement, wherein the rental agreement covers the rented transport, and determining a billing amount based on the matched information.

US 2008/270226 A1 discloses a method of calculating a usage fee for the use of electronic toll collection in a rental vehicle including collecting customer information concerning customer's renting of one or more rental vehicles, collecting toll use information concerning the use of electronic toll collection at a tollgate, calculating a usage fee based upon the customer information and the toll use information, and displaying the usage fee.

### [Disclosure]

### [Technical Problem]

An aspect of the present disclosure provides a method for providing a vehicle sharing service, device(s) therefor, and a system therefor.

Another aspect of the present disclosure provides a method for providing a vehicle sharing service, which is capable of processing a shared vehicle toll fee in real time, device(s) therefor, and a system therefor.

The technical problems to be solved by the present disclosure are not limited to the aforementioned problems, and any other technical problems not mentioned herein will be clearly understood from the following description by those skilled in the art to which the present disclosure pertains.

### [Technical Solution]

The present disclosure may provide a method for providing a vehicle sharing service, and a system therefor.

According to an aspect of the present disclosure, a method for providing a vehicle sharing service according to claim 1 is provided. According to another aspect of the present disclosure, a system according to claim 5 is provided.

Further embodiments are provided in the dependent claims.

Aspects of the present disclosure are some of preferred embodiments of the present disclosure, and various embodiments in which technical features of the present disclosure are reflected may be derived and understood based on the detailed description of the present disclosure, which will be described in detail below, by persons skilled in the art.

### [Advantageous Effects]

A description will be given of effects on the method, the device, and the system according to the present disclosure.

The present disclosure according to an embodiment may have an advantage of providing the method, the device, and the system for providing the vehicle sharing service based on artificial intelligence.

The present disclosure according to an embodiment may have an advantage of providing the method for providing the vehicle sharing service, which is capable of accurately processing the shared vehicle toll fee in real time, the device(s) therefor, and the system therefor.

The present disclosure according to an embodiment may have an advantage capable of preventing disputes associated with toll fees, because the user verifies a shared vehicle toll fee in real time.

The effects that are achieved through the present disclosure may not be limited to what has been particularly described herein, and other advantages not described herein may be more clearly understood from the following detailed description by persons skilled in the art.

### [Description of Drawings]

FIG. 1 is a drawing illustrating a vehicle sharing system according to an embodiment;
FIG. 2 is a signal sequence diagram illustrating a method for paying a toll fee of a shared vehicle according to an embodiment;
FIG. 3 is a signal sequence diagram illustrating a method for paying a toll fee of a shared vehicle according to another embodiment;
FIG. 4A is an example of a toll fee verification guidance message displayed on a vehicle terminal according to an embodiment;
FIG. 4B is an example of a toll fee verification guidance message displayed on a shared vehicle driver terminal according to an embodiment;
FIG. 5 is a signal sequence diagram illustrating a method for paying a toll fee of a shared vehicle according to the invention;
FIG. 6 illustrates a navigation screen of a vehicle terminal according to an embodiment;
FIG. 7 illustrates a navigation screen of a vehicle terminal according to another embodiment; and
FIG. 8 is a block diagram illustrating a structure of a vehicle sharing server according to an embodiment.

### [Mode for Invention]

Hereinafter, a description will be given in detail below of an apparatus and various methods to which embodiments of the present disclosure are applied with reference to the accompanying drawings.

The suffixes "module" and "unit" for the components used in the following description are given or mixed in consideration of only the ease of writing the specification, and do not have distinct meanings or roles by themselves.

In describing an embodiment, when it is described as being formed "above (over)" or "below (under)" each component, being formed "above (over)" or "below (under)" each component includes both of that two components are in direct contact with each other or that one or more other components are arranged and formed between two components.

Furthermore, the expression "above (over)" or "below (under)" each component may include the meaning of a lower direction as well as an upper direction with respect to one component.

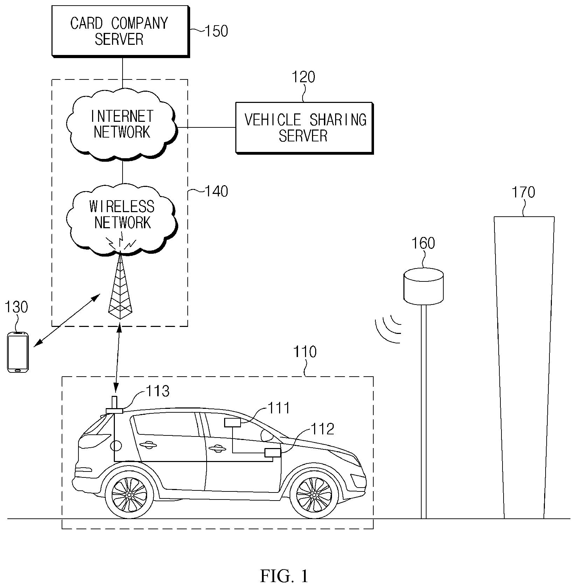

FIG. 1 is a drawing illustrating a vehicle sharing system according to an embodiment.

Referring to FIG. 1, the vehicle sharing system 150 may be configured, including a shared vehicle 110, a vehicle sharing server 120, a shared vehicle driver terminal 130, a communication network 140, a card company server 150, and a toll gate terminal 160.

The communication network 140 may include a wireless network and a wired network. FIG. 1 illustrates that the vehicle sharing server 120 is connected with the Internet network which is a wired network, but this is merely an embodiment. The vehicle sharing server 120 may be connected with a wireless network to be managed by a mobile network operator.

The shared vehicle 110 may be configured, including a toll transponder terminal 111, a vehicle terminal 112, and a vehicle external antenna 113.

The hi-pass terminal 111 and the vehicle terminal 112 may be connected with each other in a wired or wireless manner to exchange information with each other.

As an example, the hi-pass terminal 111 and the vehicle terminal 112 may be connected with each other through a certain communication cable. As an example, the communication cable may include, but is not limited to, a controller area network (CAN) communication cable, an Ethernet communication cable, a coaxial cable, a high definition multimedia interface (HDMI) cable, a USB communication cable, an unshielded twisted pair (UTP) cable, a shielded twisted pair (STP) cable, a folded twisted pair (FTP) cable, or the like.

As another example, the hi-pass terminal 111 and the vehicle terminal 112 may interwork with each other through short-range wireless communication -for example, Bluetooth communication-.

The vehicle terminal 112 may transmit and receive a wireless signal via the vehicle external antenna 113. Herein, the wireless signal may include, but is not limited to, a global positioning system (GPS) satellite signal as well as a mobile communication signal. As an example, the mobile communication signal may include, but is not limited to, a 3G wideband code division multiple access (WCDMA) signal, a 4G long term evolution (LTE) signal, a 5G new radio (NR) signal, or the like.

The vehicle terminal 112 may access the communication network 140 via the vehicle external antenna 113 to exchange a message with the vehicle sharing server 120.

Furthermore, the vehicle terminal 112 may receive a GPS satellite signal via the vehicle external antenna 113 to obtain current position information of the shared vehicle 110.

Herein, the current position of the shared vehicle 110 may be determined by interworking with a separate position server (not shown) connected with the communication network 140.

The vehicle terminal 112 may exchange information with the shared vehicle driver terminal 130 through short range wireless communication.

As an example, the short range wireless communication may include, but is not limited to, Bluetooth communication, Wi-Fi communication, ultra wideband band (UWB) communication, ZigBee communication, infrared communication, near field communication (NFC), or the like.

As an example, the shared vehicle driver terminal 130 registered with the shared vehicle 110 may be automatically Bluetooth paired with the vehicle terminal 112 after the vehicle starts.

The vehicle terminal 112 may download and run a certain vehicle sharing service app for the vehicle terminal 112 for providing various vehicle sharing services from the vehicle sharing server 120.

Furthermore, the shared vehicle driver terminal 130 may download and run a certain vehicle sharing service app for user terminal for providing various vehicle sharing services from the vehicle sharing server 120.

As an example, the vehicle sharing service app may provide, but is not limited to, a shared vehicle search function, a shared vehicle reservation function, a shared vehicle reservation cancellation/change function, a shared vehicle exchange function, a shared vehicle transfer guidance function, a shared vehicle toll fee guidance function, or the like.

The user may run the vehicle sharing service app installed in his or her portable terminal or the vehicle terminal 112 to search for and select a shared vehicle suitable for his or her schedule and travel purpose and may reserve the use of the selected shared vehicle.

Furthermore, when the schedule changes while the shared vehicle is in use, the user may extend an expiration date of the shared vehicle which is currently driving by means of the vehicle sharing service app.

When there is another reservation person for the shared vehicle requested to extend the expiration date, the vehicle shared server 120 may search for at least one alternative vehicle for the corresponding reservation person and may provide the found result to a portable terminal of the corresponding reservation person. The reservation person may select an alternative vehicle and may transmit the selected result to the vehicle sharing server 120 to perform a reservation setting of the new shared vehicle.

Furthermore, the user according to an embodiment may replace (exchange) or transfer to another shared vehicle by means of the vehicle sharing service app, while using the corresponding shared vehicle.

Furthermore, the shared vehicle user according to an embodiment may verify information about a toll road fee in real time by means of the vehicle sharing service app, while driving the shared vehicle.

Furthermore, the shared vehicle user according to an embodiment may perform evaluation of the shared vehicle by means of the vehicle sharing service app.

Furthermore, the shared vehicle user according to an embodiment may perform evaluation of an immediately previous user of the corresponding shared vehicle by means of the vehicle sharing service app.

The vehicle sharing server 120 may collect user evaluation information about the shared vehicle and may determine to deregister the shared vehicle based on the collected information.

When receiving a certain control signal providing a notification of vehicle access from a vehicle detector (not shown) disposed at one side of the access road to a toll gate 170, the toll gate terminal 160 may output a certain message requesting payment information of the vehicle, the access of which is detected, via an antenna provided therein.

Various technologies may be used for wireless communication between the hi-pass terminal 111 and the toll gate terminal 160. For example, the hi-pass terminal 111 and the toll gate terminal 160 may exchange information with each other through NFC or infrared communication.

The hi-pass terminal 111 may detect a signal output via the antenna of the toll gate terminal 160. An electronic card (not shown) for paying for a toll fee may be mounted on the hi-pass terminal 111.

The hi-pass terminal 111 may read and transmit payment information from the electronic card to the toll gate terminal 160 depending on the request of the toll gate terminal 160.

When receiving payment complete information from the toll gate terminal 160, the hi-pass terminal 111 may update payment information of the electronic card.

The hi-pass terminal 111 may transmit the payment complete information to the vehicle terminal 112.

The vehicle terminal 112 may transmit a toll fee settlement request message including a vehicle identifier and toll fee payment complete information to the vehicle sharing server 120 via the vehicle external antenna 113.

The vehicle sharing server 120 may identify a current driver account of the shared vehicle 110 corresponding to the vehicle identifier.

The vehicle sharing server 120 may add the corresponding toll fee to a vehicle sharing service usage fee corresponding to the identified driver account.

The vehicle sharing server 120 may transmit a toll fee settlement complete message including information about a toll fee added recently and information about a usage fee accumulated so far to the vehicle terminal 112.

The vehicle terminal 112 may output the information about the toll fee added recently and the information about the usage fee accumulated so far through an output means provided therein, -which may include, for example, a display screen, a speaker, and the like-.

The vehicle terminal 112 according to an embodiment may transmit the information about the toll fee added recently and the information about the usage fee accumulated so far to the shared vehicle driver terminal 130.

As another embodiment, the vehicle sharing server 120 may directly transmit the toll fee settlement complete message including the information about the toll fee added recently and the information about the usage fee accumulated so far to a previously registered terminal -that is, the shared vehicle driver terminal 130- in response to the identified driver account.

The toll gate terminal 160 may charge the toll fee to the card company server 150 based on the payment complete information.

The vehicle sharing server 120 according to an embodiment may transmit a toll fee confirmation request message including information about the toll fee to be settled to the shared vehicle driver terminal 130 for more accurate toll fee settlement. Herein, the information about the fee to be settled may include, but is not limited to, section information, toll fee information, or information about a toll gate transit time or the like.

When it is verified that the toll fee is correct by a shared vehicle driver, the shared vehicle driver terminal 130 may transmit the toll fee verification complete message to the vehicle sharing server 120.

When the toll fee verification complete message is received, the vehicle sharing server 120 may add the corresponding toll fee to the usage fee of the corresponding driver account of the corresponding shared vehicle.

When it is verified that the toll fee is not correct by the shared vehicle driver, the shared vehicle driver terminal 130 may transmit a toll fee objection message to the vehicle sharing server 120.

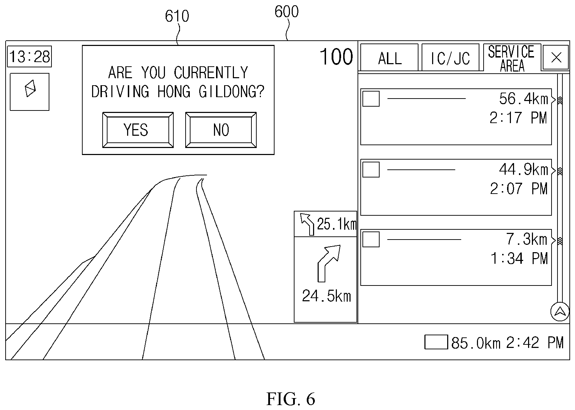

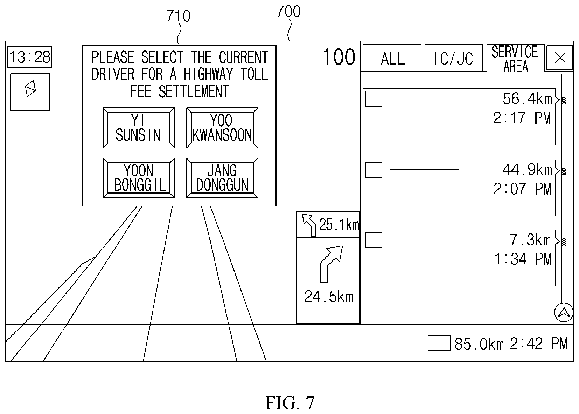

When the toll fee objection message is received, the vehicle sharing server 120 may perform a current driver verification procedure with the corresponding vehicle terminal 112, as shown in FIGS. 6 and 7 described below.

By means of the above-mentioned embodiment of FIG. 1, because it is possible for the shared vehicle driver to pay and verify a toll fee in real time, there is an advantage capable of minimizing future disputes over toll fees.

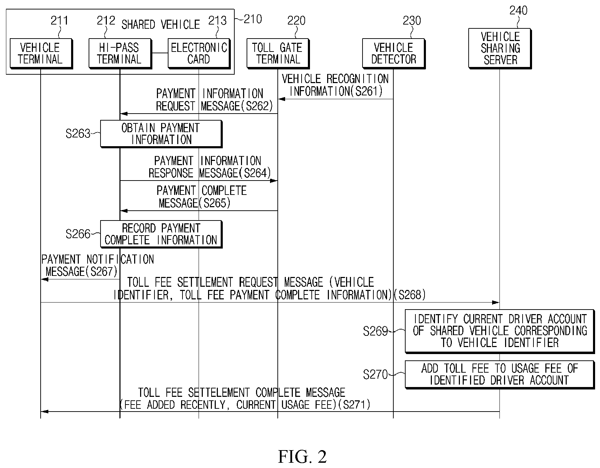

FIG. 2 is a signal sequence diagram illustrating a method for paying a toll fee of a shared vehicle according to an embodiment.

Referring to FIG. 2, when a vehicle entering a corresponding toll gate is detected, a vehicle detector 230 installed at one side of an access road to the toll gate may transmit vehicle recognition information to a toll gate terminal 220 (S261).

The toll gate terminal 220 may transmit a payment information request message via an antenna provided therein (S262).

When the payment information request message is received, a hi-pass terminal 212 mounted on a shared vehicle 210 may obtain payment information from an electronic card 213 (S263). Herein, the payment information may include, but is not limited to, an electronic card number, an expiration date, user information, or the like.

The hi-pass terminal 212 may transmit a payment information response message including the obtained payment information to the toll gate terminal 220 (S264).

The toll gate terminal 220 may transmit a payment complete message including payment complete information to the hi-pass terminal 212 (S265).

The hi-pass terminal 212 may register the payment complete information with the electronic card 213 (S266). Herein, the payment complete information may include, but is not limited to, information about a payment date and time, a passing section, a toll fee, or the like.

The shared vehicle 212 according to an embodiment may have a camera (not shown) for capturing an image of a face of a driver. As an example, when the payment complete message is received, the hi-pass terminal 212 may transmit a certain control signal to the camera to control to capture an image of the driver. The captured driver image may be stored in the electronic card 213 or may be stored together with the payment complete information in a separately provided memory.

The hi-pass terminal 212 may transmit a payment notification message including the payment complete information to the vehicle terminal 211 (S267).

The vehicle terminal 211 may transmit a toll fee settlement request message including a vehicle identifier for uniquely identifying the shared vehicle 210 and the toll fee payment complete information to the vehicle sharing server 240 (S268).

The vehicle sharing server 240 may identify a current driver account of a shared vehicle corresponding to the vehicle identifier and may add the toll fee to a usage fee of the identified driver account (S269 and S270).

The vehicle sharing server 240 may transmit a toll fee settlement complete message including information about a toll fee added recently and information about a usage fee accumulated so far to the vehicle terminal 211 (S271).

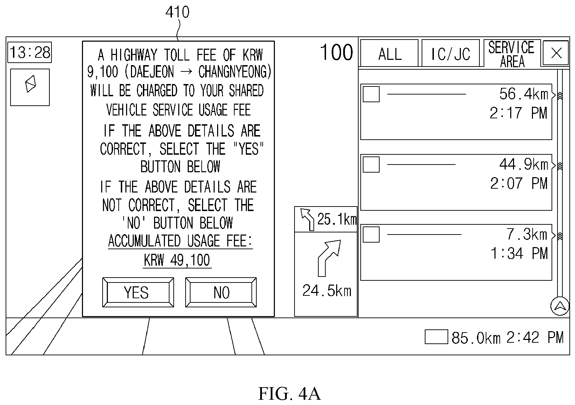

As an example, referring to FIG. 4A, the vehicle terminal 211 may form and output a pop-up window 410 including a certain toll fee verification guidance message including information about a toll fee added recently and information about an accumulated usage fee on the screen of the vehicle terminal 211.

Herein, the pop-up window 410 may include, for example, a 'YES' button and a 'NO' button.

When the 'YES' button is selected by the user, the vehicle terminal 211 may transmit a toll fee verification complete message to the vehicle sharing server 240.

On the other hand, when the 'NO' button is selected by the user, the vehicle terminal 211 may transmit a toll fee objection message to the vehicle sharing server 240.

The vehicle sharing server 240 may transmit a vehicle sharing service call center phone number to the vehicle terminal 211. A shared vehicle driver may make a call to a call center to settle the toll fee.

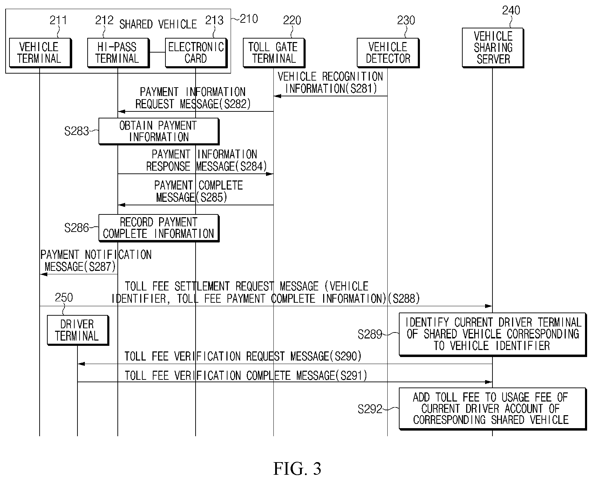

FIG. 3 is a signal sequence diagram illustrating a method for paying a toll fee of a shared vehicle according to another embodiment.

Referring to FIG. 3, when a vehicle entering a corresponding toll gate is detected, a vehicle detector 230 installed at one side of an access road to the toll gate may transmit vehicle recognition information to a toll gate terminal 220 (S281).

The toll gate terminal 220 may transmit a payment information request message via an antenna provided therein (S282).

When the payment information request message is received, a hi-pass terminal 212 mounted on a shared vehicle 210 may obtain payment information from an electronic card 213 (S283). Herein, the payment information may include, but is not limited to, an electronic card number, an expiration date, user information, or the like.

The hi-pass terminal 212 may transmit a payment information response message including the obtained payment information to the toll gate terminal 220 (S284).

The toll gate terminal 220 may transmit a payment complete message including payment complete information to the hi-pass terminal 212 (S285).

The hi-pass terminal 212 may register the payment complete information with the electronic card 213 (S286). Herein, the payment complete information may include, but is not limited to, information about a payment date and time, a passing section, a toll fee, or the like.

The shared vehicle 212 according to an embodiment may have a camera (not shown) for capturing an image of a face of a driver. As an example, when the payment complete message is received, the hi-pass terminal 212 may transmit a certain control signal to the camera to control to capture an image of the driver. The captured driver image may be stored in the electronic card 213 or may be stored together with the payment complete information in a separately provided memory.

The hi-pass terminal 212 may transmit a payment notification message including the payment complete information to the vehicle terminal 211 (S287).

The vehicle terminal 211 may transmit a toll fee settlement request message including a vehicle identifier for uniquely identifying the shared vehicle 210 and the toll fee payment complete information to the vehicle sharing server 240 (S288).

The vehicle sharing server 240 may identify a current driver account of a previously registered shared vehicle in response to the vehicle identifier and may identify the previously registered driver terminal 250 in response to the identified driver account (S289). Herein, shared vehicle information corresponding to the vehicle identifier and driver information reserved for each shared vehicle may be maintained in a database of the vehicle sharing server 240.

The vehicle sharing server 240 may transmit a toll fee verification complete message including information about a toll fee to be added to a usage fee to the identified driver terminal 250 (S290).

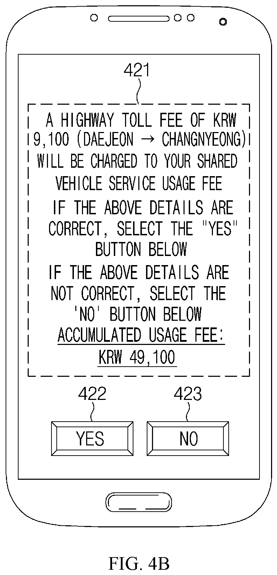

As shown in FIG. 4B, the driver terminal 250 may display a toll fee verification guidance message including information about a usage fee to be accumulated and a recent toll fee to be added to the usage fee on a terminal screen.

Herein, a 'YES' button 422 and a 'NO' button 423 may be included in the terminal screen. When the 'YES' button 422 is selected by the user, the driver terminal 251 may transmit a toll fee verification complete message to the vehicle sharing server 240 (S291).

The vehicle sharing server 240 may add the corresponding toll fee to the usage fee of the current driver account of the corresponding shared vehicle depending on the received toll fee verification complete message (S292).

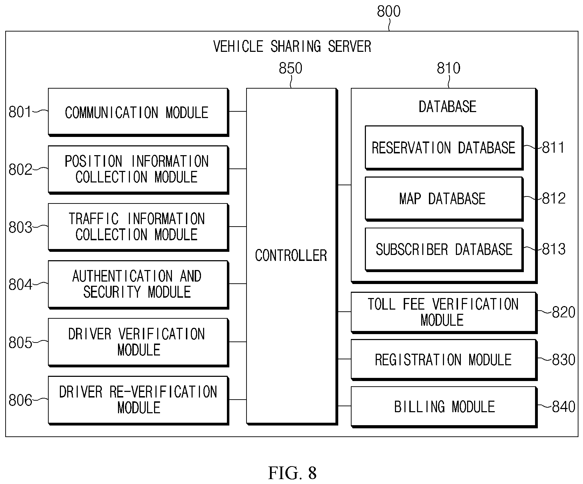

On the other hand, when the 'NO' button 423 is selected by the user, the driver terminal 251 may transmit a toll fee objection message to the vehicle sharing server 240. The vehicle sharing server 240 may perform a driver verification procedure shown in FIGS. 7 and 8 below to verify a real driver to pay the corresponding toll fee.

FIG. 4A is an example of a toll fee verification guidance message displayed on a vehicle terminal according to an embodiment.

Referring to FIG. 4A, the vehicle terminal may form and output a pop-up window 410 including a toll fee verification guidance message for user verification for a toll fee and an accumulated usage fee.

When receiving a toll fee settlement complete message from a vehicle sharing server, the vehicle terminal may form and output the pop-up window 410.

FIG. 4B is an example of a toll fee verification guidance message displayed on a shared vehicle driver terminal according to an embodiment;

Referring to FIG. 4B, the shared vehicle driver terminal may form and output a toll fee verification screen 421 including a toll fee verification guidance message 421 for user verification for a toll fee and an accumulated usage fee, a 'YES' button 422, and a 'NO' button 423.

When receiving a toll fee verification request message from a vehicle sharing server, the shared vehicle driver terminal may form and output the toll fee verification screen 421.

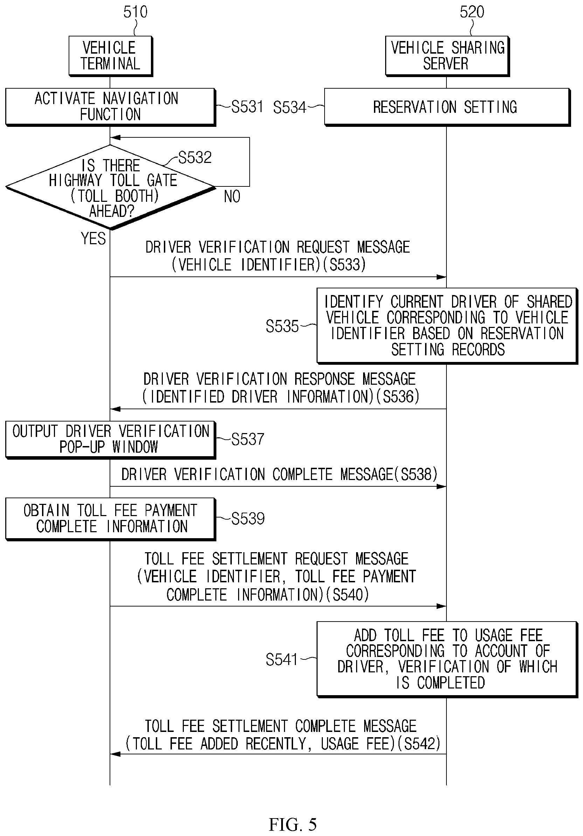

FIG. 5 is a signal sequence diagram illustrating a method for paying a toll fee of a shared vehicle according to the invention.

A vehicle terminal 531 according to an embodiment may be loaded with an audio/video playback function, a navigation function, or the like.

Referring to FIG. 5, when the vehicle terminal 510 is driven as a vehicle starts, the navigation function may be automatically activated (S531).

The vehicle terminal 510 determines whether there is a highway toll gate -that is, a toll booth- ahead based on navigation information while driving (S532).

When there is the toll booth ahead as a result of the determination, the vehicle terminal 510 transmits a driver verification request message including a vehicle identifier to a vehicle sharing server 520. When a distance between the shared vehicle and the toll booth enters within a certain distance, the vehicle terminal 510 may generate and transmit the driver verification request message to the vehicle sharing server 520.

The vehicle sharing server 520 may maintain reservation setting records for each shared vehicle in a reservation database (S534).

When the driver verification request message is received, the vehicle sharing server 520 may query for reservation setting records corresponding to a corresponding vehicle identifier with reference to the reservation database and identifies a current driver of a corresponding shared vehicle based on the queried result (S535).

The vehicle sharing server 520 transmits a driver verification response message including the identified driver information to the vehicle terminal 510 (S536).

The vehicle terminal 510 outputs a driver verification pop-up window for verifying whether the driver identified by the vehicle sharing server 520 is correct on one side of a navigation screen (S537).

As an example, the driver verification pop-up window may include a message including the identified driving information, a 'YES' button, and a 'NO' button like reference numeral 610 of FIG. 6 described below.

When the 'YES' button of the driver verification pop-up window 610 is selected by a user, the vehicle terminal 510 transmits a driver verification complete message indicating that the identified driver is a current driver to the vehicle sharing server 520 (S538).

The vehicle terminal 510 obtains toll fee payment complete information from a hi-pass terminal (S539).

The vehicle terminal 510 transmits a toll fee settlement request message including the vehicle identifier and the toll fee payment complete information to the vehicle sharing server 520 (S540).

The vehicle sharing server 520 adds a toll fee to a usage fee corresponding to an account of a driver, the verification of which is completed by the user (S541).

The vehicle sharing server 520 transmits a toll fee settlement complete message including information about a toll fee added recently and information about a usage fee accumulated so far to the vehicle terminal 542 (S542).

When the 'NO' button of the driver verification pop-up window 610 is selected by the user, the vehicle terminal 510 may transmit a driver re-verification request message to the vehicle sharing server 520.

When receiving the driver re-verification request message, the vehicle sharing server 520 may identify at least one candidate drier based on reservation setting records before and after a certain time with respect to a current time point. Herein, the driver identified in S535 may be excluded from a candidate driver list.

The vehicle sharing server 520 may transmit a driver re-verification response message including the identified candidate driver list to the vehicle terminal 510.

The vehicle terminal 510 may output a driver selection pop-up window for allowing the user to select any one of the identified candidate drivers on one side of a navigation screen.

As shown in reference numeral 710 of FIG. 7, the driver selection pop-up window may include at least one selectable candidate driver button.

The user may select his or her name of the candidate drivers displayed on the driver selection pop-up window.

The vehicle sharing terminal 510 may transmit a driver re-verification complete message including the driver name selected by the user to the vehicle sharing server 520. The vehicle sharing server 520 may charge a toll fee to an account corresponding to the driver name included in the driver re-verification complete message.

FIG. 6 illustrates a navigation screen of a vehicle terminal according to an embodiment.

Referring to FIG. 6, when receiving a driver verification response message including driver information from a vehicle sharing server, the vehicle terminal may output a driver verification pop-up window 610 on one side of a navigation screen 600.

When a driver name displayed on the driver verification pop-up window 610 is the same as a user name, a user may select a "YES" button. When the driver name displayed on the driver verification pop-up window 610 is not the same as the user name, the user may select a 'NO' button.

FIG. 7 illustrates a navigation screen of a vehicle terminal according to another embodiment.

Referring to FIG. 7, when receiving a driver re-verification response message including a candidate driver list from a vehicle sharing server, the vehicle terminal may output a driver re-verification pop-up window 710 on one side of a navigation screen 700.

A user may select a user name among driver names displayed on the driver re-verification pop-up window 710.

FIG. 8 is a block diagram illustrating a structure of a vehicle sharing server according to an embodiment.

Referring to FIG. 8, a vehicle sharing server 800 may be configured, including a communication module 801, a position information collection module 802, a traffic information collection module 803, an authentication and security module 804, a driver verification module 805, a driver re-verification module 806, a database 810, a toll fee verification module 820, a registration module 830, a billing module 840, and a controller 850.

The communication module 801 may process a signal transmitted and received over a communication network 140.

The position information collection module 802 may obtain position information of a shared vehicle and position information of a shared vehicle driver terminal periodically or when a specific event occurs.

The traffic information collection module 803 may interwork with a traffic information providing server connected with the Internet network to collect current traffic information corresponding to a specific area.

The authentication and security module 804 may authenticate a user which subscribes to a vehicle sharing service and may generate a security message.

When a driver verification request message including a vehicle identifier is received from a vehicle terminal, the driver verification module 805 may identify a current driver of a shared vehicle corresponding to the vehicle identifier and may transmit a driver verification response message including the identified driver information to the vehicle terminal.

When it is verified that the driver identified by the driver verification module 805 is not a driver who will pay a toll fee generated recently -that is, when a driver re-verification request message is received from the vehicle terminal-, the driver re-verification module 806 may identify at least one candidate driver based on reservation setting records before and after a certain time with respect to a current time point. Herein, the driver identified by the driver verification module 805 may be excluded from a candidate driver list.

The driver re-verification module 806 may transmit a driver re-verification response message including the identified candidate driver list to the vehicle terminal.

The database 910 may include a reservation database 811 which maintains reservation setting information for each shared vehicle registered with the service, a map database 812 which records various pieces of map information, and a subscriber database 813 which maintains various pieces of information for each user account which subscribes to the vehicle sharing service.

As an example, the reservation database 811 may include, but is not limited to, owner information for each shared vehicle, vehicle type and option information, accident history information, accumulated penalty point information, vehicle evaluation information, reservation information, or the like. Herein, the reservation information may include reservation person information, information about a reservation date and time, information about a return date and time and place, or the like.

The subscriber database 813 may include, but is not limited to, contact information for each user account, information about authentication and security -for example, biometric information, a security key value, and an authentication key value-, shared vehicle reservation information, past shared vehicle usage record information, billing information, various pieces of point information, coupon information generated in response to a corresponding account, user evaluation information, driving statistical information, penalty statistical information, insurance rate information, accumulated user penalty point information, or the like.

Herein, the billing information may include, but is not limited to, a toll road fee, a parking fee, a penalty, discount records, or the like as well as a shared vehicle usage fee.

When a toll fee settlement request message is received from the vehicle terminal, the toll fee verification module 820 may identify a driver account to charge a corresponding toll fee and may generate and transmit a toll fee verification request message for user verification to the vehicle terminal or a previously registered portable terminal in response to the identified driver account.

The registration module 830 may register the corresponding vehicle as a shared vehicle or unregister the corresponding vehicle depending on a request of a shared vehicle owner or a shared vehicle service provider. The registration module 830 may access the reservation database 811 register the corresponding vehicle as the shared vehicle or unregister the corresponding vehicle.

The billing module 840 may calculate a shared vehicle usage fee for each user account. Furthermore, the billing module 840 may assign a point or fee reduction benefits to a corresponding subscriber account based on the result of processing a special service -for example, including shared vehicle transfer completion, shared vehicle exchange completion, and the like-.

Furthermore, the billing module 840 may generate various bonus coupons and may transmit the corresponding coupon to the corresponding user terminal.

Particularly, the billing module 840 may add the toll fee verified by the user to a shared vehicle usage fee of the corresponding driver account.

The controller 850 may control the overall operation of the vehicle sharing server 800 and an input and output of the vehicle sharing server 800. Particularly, the controller 850 may detect various events and may form and provide a user interface screen according to the detected event to the vehicle terminal and (or) the user terminal.

A detailed operation of the controller 850 may be replaced with the above-mentioned description of FIGS. 1 to 7.

Although it has been described that all components configuring the embodiment of the present disclosure are combined with each other as one component or are combined and operated with each other as one component, the present disclosure is not necessarily limited to the above-mentioned embodiment. That is, all the components may also be selectively combined and operated with each other as one or more component without departing from the scope of the present disclosure. In addition, although each of all the components may be implemented by one independent hardware, some or all of the respective components which are selectively combined with each other may be implemented by a computer program having a program module performing some or all of functions combined with each other in one or plural hardware. Codes and code segments configuring the computer program may be easily inferred by those skilled in the art to which the present disclosure pertains. The computer program is stored in computer readable media and is read and executed by a computer, thereby making it possible to implement the embodiment of the present disclosure. An example of the computer readable media may include magnetic recording media, optical recording media, or the like.

In addition, hereinabove, the terms "include", "configure", "have", or the like, are to be interpreted to imply the inclusion of other components rather than the exclusion of other components, since they mean that a corresponding component may be included unless particularly described otherwise. Unless defined otherwise, all the terms including technical and scientific terms have the same meaning as meanings generally understood by those skilled in the art to which the present disclosure pertains. Generally used terms such as terms defined in a dictionary should be interpreted as the same meanings as meanings within a context of the related art and should not be interpreted as ideally or excessively formal meanings unless clearly defined in the present disclosure.

Furthermore, in describing the components of the present disclosure, terms such as first, second, "A", "B", (a), (b), and the like may be used. These terms are merely intended to distinguish one component from another component, and the terms do not limit the nature, sequence or order of the corresponding components. When it is described that any component is "connected" or "coupled" with another component, it should be understood that the component may be directly connected or coupled with the other component, but another component may be "connected" or "coupled" between respective components.

It is possible to implement the above-mentioned methods as a computer readable code in a computer readable storage medium. The computer readable storage media may include all types of storage media which store data decoded by a computer system. For example, there may be a read only memory (ROM), a random access memory (RAM), a magnetic tape, a magnetic disc, a flash memory, an optical data storage, and the like. Furthermore, the computer readable storage media may be distributed to a computer system connected over a computer communication network to be stored as a code readable in a distributed manner and be downloaded and executed in a corresponding device.

## Claims

1. A method for providing a vehicle sharing service, the method being performed by a vehicle sharing server (520) and a vehicle terminal (510) mounted on a shared vehicle, wherein the vehicle sharing server (520) is interworking with the vehicle terminal (510) through a communication network, the method comprising:
determining, by the vehicle terminal, whether there is a toll gate ahead based on navigation information while driving (S532);
when there is the toll gate ahead as a result of the determination, receiving, by the vehicle sharing server, a driver verification request message including the vehicle identifier from the vehicle terminal (S533);
identifying, by the vehicle sharing server, a current driver based on reservation setting records of the shared vehicle corresponding to the vehicle identifier (S535);
transmitting, by the vehicle sharing server, a driver verification response message including the identified current driver information to the vehicle terminal (S536);
outputting, by the vehicle terminal, a driver verification pop-up window for verifying whether the driver identified by the vehicle sharing server is correct on one side of a navigation screen (S537);
when it is verified that the driver identified by the vehicle sharing server is correct, transmitting, by the vehicle terminal, a driver verification complete message indicating that the identified driver is a current driver to the vehicle sharing server (S538);
obtaining, by the vehicle terminal, toll fee payment complete information from a hi-pass terminal, mounted on the shared vehicle and connected with the vehicle terminal, after payment between a terminal of the toll gate through which the shared vehicle passes and the hi-pass terminal is completed (S539);
receiving, by the vehicle sharing server, a toll fee settlement request message including a vehicle identifier corresponding to the shared vehicle and information about the toll fee, payment of which is completed, from the vehicle terminal (S540);
adding, by the vehicle sharing server, the toll fee, the payment of which is completed, to a usage fee of the identified driver account (S541); and
transmitting, by the vehicle sharing server, a toll fee settlement complete message including information about the added toll fee and information about the usage fee after being added to the vehicle terminal (S541).

2. The method of claim 1, further comprising:
when it is not verified that the driver is identified, receiving, by the vehicle sharing server, a driver re-verification request message from the vehicle terminal;
identifying, by the vehicle sharing server, at least one candidate driver based on reservation setting records before and after a certain time with respect to a current time point; and
transmitting, by the vehicle sharing server, a driver re-verification response message including the identified candidate driver list to the vehicle terminal.

3. The method of claim 2, wherein the identified current driver is excluded from the candidate driver list.

4. The method of claim 3, wherein the vehicle terminal displays the candidate screen on a screen to be selectable by a user,
further comprising:
receiving, by the vehicle terminal, a driver re-verification complete message including information about a driver selected by the user,
wherein the toll fee, the payment of which is completed, is added to a usage fee of an account corresponding to the selected driver.

5. A system comprising:
a vehicle sharing server (520) for providing a vehicle sharing service; and
a vehicle terminal (510) mounted on a shared vehicle,
wherein the vehicle sharing server is interworking with the vehicle terminal through a communication network, and
wherein the vehicle sharing server and the vehicle terminal are configured to perform the method according to any one of the preceding claims.

## Patentansprüche

1. Verfahren zum Bereitstellen eines Fahrzeug-Sharing-Dienstes, wobei das Verfahren durch einen Fahrzeug-Sharing-Server (520) und ein Fahrzeug-Terminal (510) durchgeführt wird, das an einem Shared-Fahrzeug montiert ist, wobei der Fahrzeug-Sharing-Server (520) mit dem Fahrzeug-Terminal (510) über ein Kommunikationsnetzwerk zusammenarbeitet, wobei das Verfahren umfasst:
Bestimmen, durch das Fahrzeug-Terminal, ob eine Mautstelle voraus liegt, basierend auf einer Navigationsinformation beim Fahren (S532);
wenn als Ergebnis der Bestimmung die Mautstelle voraus liegt, Empfangen, durch den Fahrzeug-Sharing-Server, einer Fahrerverifizierungsanforderungsnachricht umfassend den Fahrzeugidentifikator von dem Fahrzeug-Terminal (S533);
Identifizieren, durch den Fahrzeug-Sharing-Server, eines derzeitigen Fahrers basierend auf Reservierungseinstellungsaufzeichnungen des Shared-Fahrzeugs entsprechend dem Fahrzeugidentifikator (S535);
Übermitteln, durch den Fahrzeug-Sharing-Server, einer Fahrerverifizierungsantwortnachricht umfassend die Information über den identifizierten derzeitigen Fahrer zu dem Fahrzeug-Terminal (S536);
Ausgeben, durch das Fahrzeug-Terminal, eines Fahrerverifizierungs-Pop-up-Fensters zum Verifizieren, ob der durch den Fahrzeug-Sharing-Server identifizierte Fahrer korrekt ist, auf einer Seite eines Navigationsbildschirms (S537);
wenn verifiziert ist, dass der durch den Fahrzeug-Sharing-Server identifizierte Fahrer korrekt ist, Übermitteln, durch das Fahrzeug-Terminal, einer Fahrerverifizierungsabschlusssnachricht, die angibt, dass der identifizierte Fahrer ein derzeitiger Fahrer ist, zu dem Fahrzeug-Sharing-Server (S538);
Erhalten, durch das Fahrzeug-Terminal, einer Mautgebührzahlungsabschlusssinformation von einer Mautbox, die an dem Shared-Fahrzeug montiert und mit dem Fahrzeug-Terminal verbunden ist, nachdem eine Zahlung zwischen einem Terminal der Mautstelle, durch welche das Shared-Fahrzeug hindurchgeht, und der Mautbox abgeschlossen ist (S539);
Empfangen, durch den Fahrzeug-Sharing-Server, einer Mautgebührbegleichungsanforderungsnachricht umfassend einen Fahrzeugidentifikator entsprechend dem Shared-Fahrzeug und eine Information über die Mautgebühr, deren Zahlung abgeschlossen ist, von dem Fahrzeug-Terminal (S540);
Addieren, durch den Fahrzeug-Sharing-Server, der Mautgebühr, deren Zahlung abgeschlossen ist, zu einer Nutzungsgebühr des identifizierten Fahrer-Accounts (S541); und
Übermitteln, durch den Fahrzeug-Sharing-Server, einer Mautgebührbegleichungsabschlussnachricht umfassend eine Information über die addierte Mautgebühr und eine Information über die Nutzungsgebühr, nachdem sie addiert worden ist, zu dem Fahrzeug-Terminal (S541).

2. Verfahren nach Anspruch 1, ferner umfassend:
wenn nicht verifiziert ist, dass der Fahrer identifiziert ist, Empfangen, durch den Fahrzeug-Sharing-Server, einer erneuten Fahrer-Verifizierungsanforderungsnachricht von dem Fahrzeug-Terminal;
Identifizieren, durch den Fahrzeug-Sharing-Server, wenigstens eines Kandidatenfahrers basierend auf Reservierungseinstellungsaufzeichnungen vor und nach einer gewissen Zeit bezüglich eines derzeitigen Zeitpunkts; und
Übermitteln, durch den Fahrzeug-Sharing-Server, einer erneuten FahrerVerifizierungsantwortnachricht umfassend die identifizierte Kandidatenfahrerliste zu dem Fahrzeug-Terminal.

3. Verfahren nach Anspruch 2, wobei der identifizierte derzeitige Fahrer von der Kandidatenfahrerliste ausgeschlossen wird.

4. Verfahren nach Anspruch 3, wobei das Fahrzeug-Terminal den Kandidatenbildschirm auf einem Bildschirm anzeigt, um durch einen Benutzer auswählbar zu sein,
ferner umfassend:
Empfangen, durch das Fahrzeug-Terminal, einer erneuten Fahrer-Verifizierungsabschlussnachricht umfassend eine Information über einen durch den Benutzer ausgewählten Fahrer,
wobei die Mautgebühr, deren Zahlung abgeschlossen ist, zu einer Nutzungsgebühr eines Accounts addiert wird, der dem ausgewählten Fahrer entspricht.

5. System umfassend:
einen Fahrzeug-Sharing-Server (520) zum Bereitstellen eines Fahrzeug-Sharing-Dienstes; und
ein Fahrzeug-Terminal (510), das an einem Shared-Fahrzeug montiert ist,
wobei der Fahrzeug-Sharing-Server mit dem Fahrzeug-Terminal über ein Kommunikationsnetzwerk zusammenarbeitet, und
wobei der Fahrzeug-Sharing-Server und das Fahrzeug-Terminal dazu konfiguriert sind, das Verfahren nach einem der vorhergehenden Ansprüche durchzuführen.

## Revendications

1. Procédé pour fournir un service de partage de véhicule, le procédé étant exécuté par un serveur de partage de véhicule (520) et un terminal de véhicule (510) monté sur un véhicule partagé, le serveur de partage de véhicule (520) étant en interfonctionnement avec le terminal de véhicule (510) par l'intermédiaire d'un réseau de communication, le procédé comprenant les étapes de :
détermination, par le terminal du véhicule, s'il y a une barrière de péage devant sur la base d'informations de navigation pendant la conduite (S532) ;
lorsqu'il y a la barrière de péage devant suite à la détermination, réception, par le serveur de partage de véhicules, d'un message de la part du terminal du véhicule (S533) de demande de vérification de conducteur comprenant l'identifiant du véhicule,
identification, par le serveur de partage de véhicules, d'un conducteur actuel sur la base des enregistrements de paramètres de réservation du véhicule partagé correspondant à l'identifiant du véhicule (S535) ;
transmission au terminal de véhicule, par le serveur de partage de véhicules, d'un message de réponse de vérification de conducteur comprenant les informations sur le conducteur actuel identifié (S536) ;
affichage sur un côté de l'écran de navigation, par le terminal de véhicule, d'une fenêtre contextuelle de vérification de conducteur pour vérifier si le conducteur identifié par le serveur de partage de véhicules est correct (S537) ;
lorsqu'il est vérifié que le conducteur identifié par le serveur de partage de véhicules est correct, transmission au serveur de partage de véhicules, par le terminal de véhicule, d'un message complet de vérification de conducteur indiquant que le conducteur identifié est un conducteur actuel (S538) ;
obtention, par le terminal de véhicule, d'informations complètes de paiement des frais de péage à partir d'un badge de télépéage, monté sur le véhicule partagé et connecté au terminal de véhicule, après réalisation du paiement entre un terminal de la barrière de péage par laquelle le véhicule partagé passe et le badge de télépéage (S539) ;
réception, par le serveur de partage de véhicules, d'un message de la part du terminal de véhicule de demande de règlement de frais de péage comprenant un identifiant de véhicule correspondant au véhicule partagé et des informations sur les frais de péage, dont le paiement est achevé (S540) ;
ajout, par le serveur de partage de véhicules, des frais de péage, dont le paiement est achevé, aux frais d'utilisation du compte du conducteur identifié (S541) ; et
transmission au terminal du véhicule, par le serveur de partage de véhicules, d'un message d'achèvement de règlement de frais de péage comprenant des informations sur les frais de péage ajoutés et des informations sur les frais d'utilisation après l'ajout (S541).

2. Procédé selon la revendication 1, comprenant en outre les étapes de :
lorsqu'il n'est pas vérifié que le conducteur est identifié, réception, par le serveur de partage de véhicules, d'un message de la part du terminal du véhicule de demande de revérification du conducteur ;
identification, par le serveur de partage de véhicules, d'au moins un conducteur candidat sur la base des enregistrements de paramètres de réservation avant et après un certain temps par rapport à un point temporel actuel ; et
transmission au terminal du véhicule, par le serveur de partage de véhicules, d'un message de réponse de revérification du conducteur comprenant la liste de conducteurs candidats identifiés.

3. Procédé selon la revendication 2, dans lequel le conducteur actuel identifié est exclu de la liste des conducteurs candidats.

4. Procédé selon la revendication 3, dans lequel le terminal de véhicule affiche l'écran de candidat sur un écran pouvant être sélectionné par un utilisateur,
comprenant en outre les étapes de :
réception, par le terminal de véhicule, d'un message complet de revérification de conducteur comprenant des informations sur un conducteur sélectionné par l'utilisateur,
les frais de péage, dont le paiement est achevé, sont ajoutés à des frais d'utilisation d'un compte correspondant au conducteur sélectionné.

5. Système comprenant :
un serveur de partage de véhicules (520) pour fournir un service de partage de véhicules ; et
un terminal de véhicule (510) monté sur un véhicule partagé, le serveur de partage de véhicules étant en interfonctionnement avec le terminal de véhicule par l'intermédiaire d'un réseau de communication, et
le serveur de partage de véhicules et le terminal de véhicule étant configurés pour exécuter le procédé selon l'une quelconque des revendications précédentes.
